# EUROPEAN PATENT SPECIFICATION

(11) **EP 2 599 697 B1**
(45) Date of publication and mention of the grant of the patent: **03.02.2016**
(21) Application number: 12192199.3
(22) Date of filing: 12.11.2012
(51) Int. Cl.: B62J 6/02, B62K 19/30, B60Q 1/04

(54) **Straddle type vehicle**
Grätschsitz-Fahrzeug
Véhicule du type monté à califourchon

(30) Priority: 30.11.2011 JP 2011262218
(43) Date of publication of application: 05.06.2013
(73) Proprietor: Yamaha Hatsudoki Kabushiki Kaisha, Iwata-shi, Shizuoka 438-8501 (JP)
(72) Inventor: Konno, Toshihiko, Shizuoka, Shizuoka 438-8501 (JP); Aoki, Yasushi, Shizuoka, Shizuoka 438-8501 (JP)
(74) Representative: Zimmermann, Tankred Klaus

(56) References cited:
- EP-A2- 0 894 699
- JP-A- 2000 062 665
- US-A1- 2007 058 381
- US-B1- 6 497 506

## Description

### BACKGROUND

### Technical Field

The present invention relates to a structure for attaching a headlight in a straddle type vehicle.

### Description of the Background Art

Straddle type vehicles include motorcycles, for example. A motorcycle includes a headlight. A headlight is disclosed, for example, in JP 3020964 B (Patent Document 1) and Japanese Utility Model Application Publication No. Sho58(1983)-184346 (Patent Document 2).

In each of Patent Documents 1 and 2, a motorcycle includes a pair of front fork tubes. The front fork tubes are connected with each other by upper and lower brackets. A headlight is located between the two brackets and forward of the front fork tubes.

US,6,497,506 B1 describes a head lamp apparatus for a vehicle which comprises a lamp housing mounted to a front portion of a vehicle body, a head lamp bulb disposed inside the lamp housing and adapted to radiate a light, a reflector for reflecting an irradiation light from the head lamp bulb in a direction forward of the vehicle body, and a position bulb disposed in front of the head lamp bulb inside the lamp housing. The head lamp apparatus is fixed by fastening four fixing arms formed so as to project from a periphery of a housing body to a support stay of a front cowling or the front cowling itself by screws.

JP 2000-062665 A describes a headlight device arranged with a wide space between the headlight device in which a projector lamp is incorporated and a body frame front head part of a vehicle body.

EP 0 894 699 A2 describes a front optical or headlight assembly unit for a motorcycle which includes at least two light emitting units associated with a relevant support and a headlight holder box. The headlight holder box is attached by means of usual attachment means to a sleeve of a steering rod of the vehicle.

US 2007/058381 A1 describes a vehicle headlight assembly including a light projecting group accommodated within a casing and a plurality of light projecting units. A fairing made of a synthetic resin is fixedly mounted on a front portion of a motorcycle frame structure. The headlight assembly is mounted on the fairing.

### SUMMARY

An object of the present invention is to provide a straddle type vehicle where a larger headlight may be attached to a body frame in a stable manner.

This object is achieved by a straddle type vehicle according to claim 1.

It has been found out that, while some motorcycles may include a larger headlight, for example, to differentiate them from other motorcycles, such a larger headlight may lead to difficulties in supporting its weight.

In a straddle type vehicle of the present invention, a larger headlight may be attached to a body frame in a stable manner.

### BRIEF DESCRIPTION OF THE DRAWINGS

FIG. 1 is a left side view of an entire motorcycle according to an embodiment of the present invention.
FIG. 2 is a front view of the motorcycle of FIG. 1.
FIG. 3 is an exploded perspective view of the headlight.
FIG. 4 is a vertical cross-sectional view of the headlight.
FIG. 5 is a plan view of the headlight.
FIG. 6 is a front view of the headlight.
FIG. 7 is a plan view of a cross section illustrating the relationship between the headlight and bracket positioned when the handlebars are fully turned to the right.
FIG. 8 is a side view of a cross section illustrating the relationship between the headlight and bracket positioned when the handlebars are fully turned to the right.
FIG. 9 is a plan view of a cross section illustrating the relationship between the headlight and bracket positioned when the handlebars are fully turned to the left.
FIG. 10 is a side view of a cross section illustrating the relationship between the headlight and bracket positioned when the handlebars are fully turned to the left.

### DESCRIPTION OF THE EMBODIMENTS

### [Embodiments]

A straddle type vehicle according to an embodiment of the present invention will now be described with reference to the drawings. The present embodiment illustrates a scooter-type motorcycle as an example of a straddle type vehicle. The same or corresponding elements in different drawings are labeled with the same numerals, and their description will not be repeated.

### [Overall Arrangement]

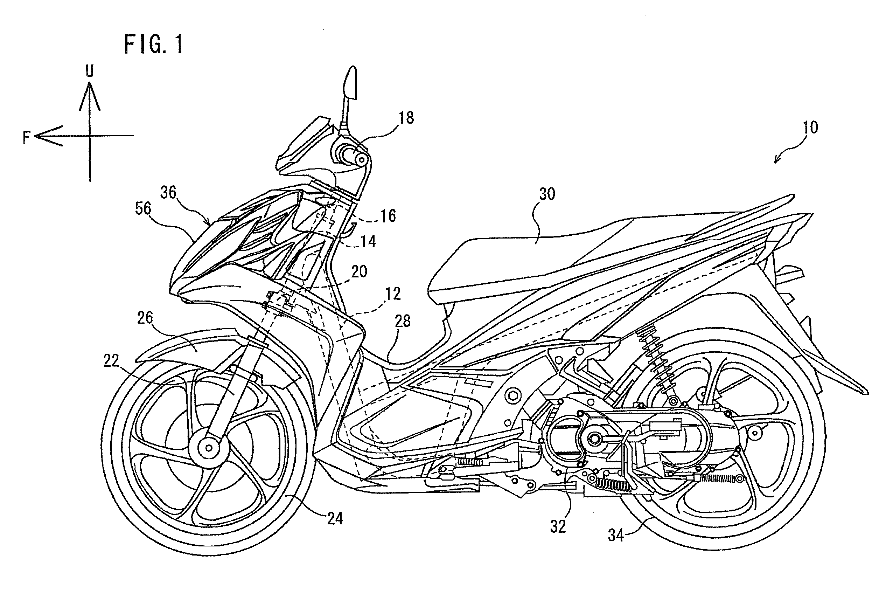

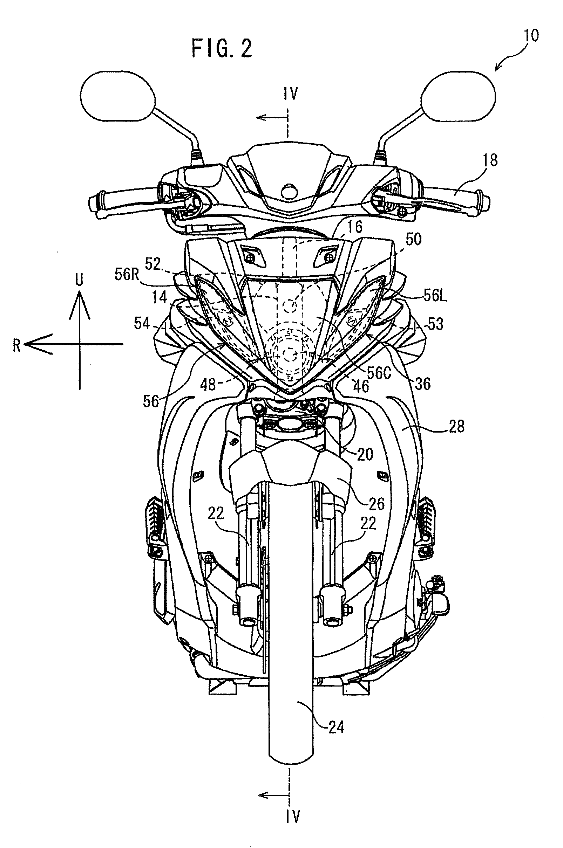

FIG. 1 is a left side view of a motorcycle 10 of an embodiment of the present invention. FIG. 2 is a front view of the motorcycle 10.

In the following description, "front/forward", "behind/rear(ward)", "left" and "right" each denote a direction as perceived by a rider sitting on the seat 30 of the motorcycle 10. In FIG. 1, the arrow F indicates the forward direction with respect to the motorcycle 10, while the arrow U indicates the upward direction with respect to the motorcycle 10. In FIG. 2, the arrow R indicates the right direction with respect to the motorcycle 10, while the arrow U indicates the upward direction with respect to the motorcycle 10.

The motorcycle 10 includes a body frame 12. A head pipe 14 is provided on the front end of the body frame 12.

A steering shaft 16 is inserted into the head pipe 14, the steering shaft being rotatable to the left and right. Handlebars 18 are attached to the top end of the steering shaft 16. The handlebars 18 may be operated to rotate the steering shaft 16.

A bracket 20 is attached to the bottom end of the steering shaft 16. The top end of each of a pair of front fork tubes 22 (front wheel support members) is attached to the bracket 20. The front fork tubes 22 rotatably support the front wheel 24.

A front fender 26 is located above the front wheel 24. The front fork tubes 22 support the front fender 26.

The body frame 12 is covered with a body cover 28. The body cover 28 may be made from a synthetic resin, for example.

A seat 30 is located above a rear portion of the body frame 12. A storage space is formed below the seat 30. A helmet, for example, may be stored in the storage space.

A power unit 32 is located below a rear portion of the body frame 12. The body frame 12 supports the power unit 32, the power unit being swingable in a top-to-bottom direction.

A rear wheel 34 is rotatably attached to the rear end of the power unit 32. Power from the power unit 32 may be transmitted to the rear wheel 34 to cause the rear wheel 34 to rotate.

### [Headlight]

The motorcycle 10 includes a headlight 36. As shown in FIGS. 1 and 2, the headlight 36 is located above the front fender 26 and forward of the head pipe 14.

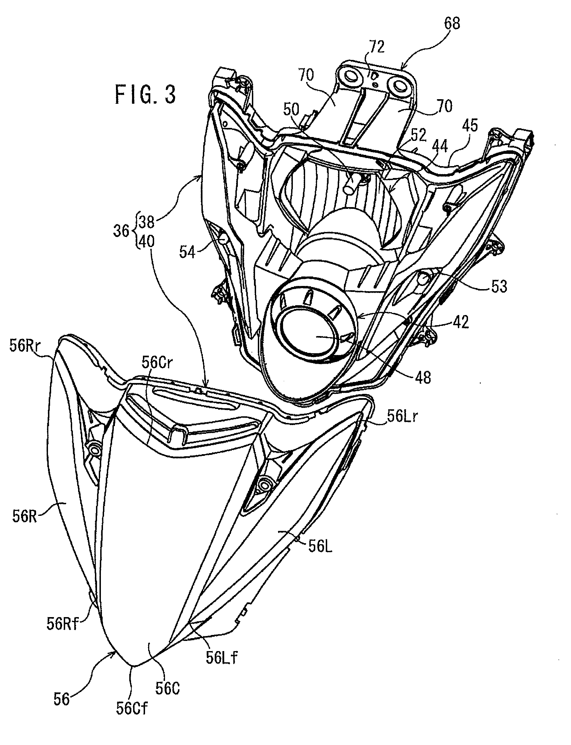

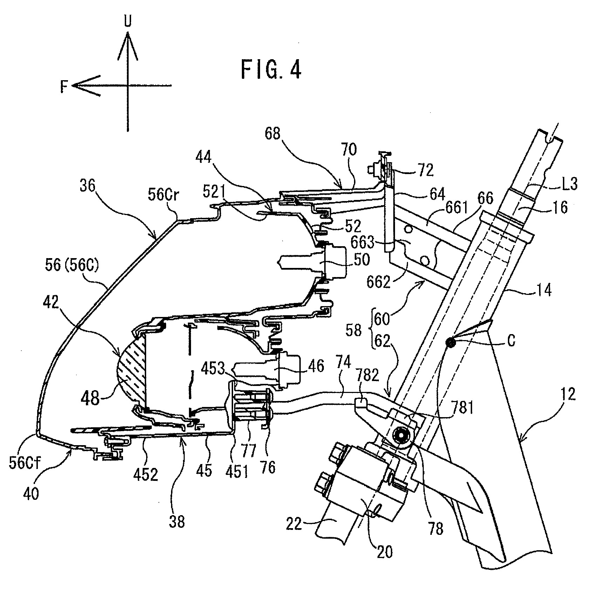

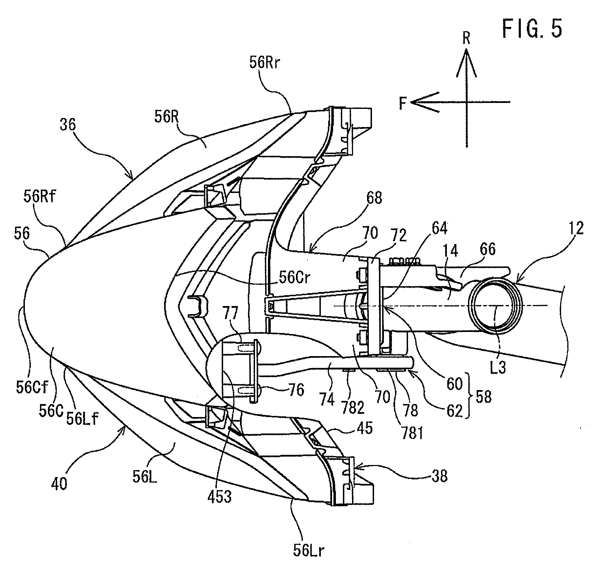

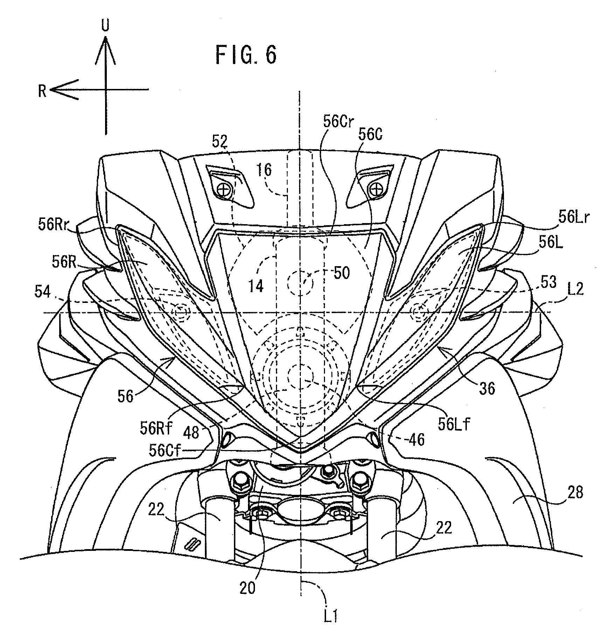

The headlight 36 will be described with reference to FIGS. 3 to 6. FIG. 3 is an exploded perspective view of the headlight 36. FIG. 4 is a vertical cross-sectional view of the headlight 36 taken on line IV-IV of FIG. 2. FIG. 5 is a plan view of the headlight 36. FIG. 6 is a front view of the headlight 36.

As shown in FIGS. 3 to 5, the headlight 36 includes a headlight body 38 and a headlight cover 40.

As shown in FIGS. 3 and 4, the headlight body 38 includes a projector lamp unit 42, a reflector lamp unit 44 and a support member 45.

According to the present embodiment, the projector lamp unit 42 and reflector lamp unit 44 are selectively turned on. Light emitted by the projector lamp unit 42 is used as a low beam. Light emitted by the reflector lamp unit 44 is used as a high beam.

As shown in FIGS. 3 and 4, the projector lamp unit 42 includes an illuminator 46 and a lens (inner lens) 48.

The illuminator 46 may be a halogen lamp, for example. The illuminator 46 is located at the rearmost point of the projector lamp unit 42.

The lens 48 is made from glass. The front side of the lens 48 is a curved hemispherical surface convex toward the front. The rear side of the lens 48 is a flat surface expanding upward and downward and to the left and right. The lens 48 is located at the front of the projector lamp unit 42. The lens 48 passes light from the illuminator 48.

As shown in FIGS. 3 and 4, the reflector lamp unit 44 includes an illuminator 50 and a reflector 52.

The illuminator 50 may be a halogen lamp, for example. The illuminator 50 is located at the rear of the reflector lamp unit 44.

The reflector 52 includes a concave portion 521 that is open toward the front. The illuminator 50 is located inside the concave portion 521. The reflector 52 reflects light emitted by the illuminator 50 toward the front.

As shown in FIG. 4, the support member 45 supports the projector lamp unit 42 and reflector lamp unit 44. As shown in FIGS. 3 and 4, the projector lamp unit 42 is located lower than the reflector lamp unit 44. As shown in FIG. 4, the rearmost point of the projector lamp unit 42 is located forward of the rearmost point of the reflector lamp unit 44.

As viewed from the front of the vehicle, as shown in FIG. 6, the illuminator 46 included in the projector lamp unit 42 and the illuminator 50 included in the reflector lamp unit 44 are vertically arranged, overlapping the head pipe 14.

The length of the projector lamp unit 42 as measured in a front-to-rear direction is greater than the length of the reflector lamp unit 44 as measured in a front-to-rear direction. The foremost point of the projector lamp unit 42 is the center of the front side of the lens 48. The rearmost point of the projector lamp unit 42 is the rearmost point of the illuminator 46. The foremost point of the reflector lamp unit 44 is the opening edge of the concave portion 521 of the reflector 52. The rearmost point of the reflector lamp unit 44 is the rearmost point of the illuminator 50.

As shown in FIG. 4, the foremost point of the projector lamp unit 42 is located forward of the foremost point of the reflector lamp unit 44. This allows the headlight cover 40 to have a front side that slopes downward toward the front. As a result, air resistance of the headlight 36 may be reduced.

As shown in FIGS. 3 and 6, the headlight body 38 further includes a left illuminator 53 and right illuminator 54. The left illuminator 53 and right illuminator 54 are attached to the support member 45. The left illuminator 53 and right illuminator 54 may serve as position lights or flashers, for example.

As shown in FIG. 6, as viewed from the front of the vehicle, the left illuminator 53 and right illuminator 54 are located to the left and right, respectively, of the direct line L1 connecting the illuminator 46 of the projector lamp unit 42 with the illuminator 50 of the reflector lamp unit 44. The illuminator 46 of the projector lamp unit 42 and the illuminator 50 of the reflector lamp unit 44 is located above and below, respectively, the direct line L2 connecting the left illuminator 53 with the right illuminator 54. The lowermost point of the illuminator 46 of the projector lamp unit 42 is located lower than the lowermost point of each of the left illuminator 53 and right illuminator 54.

As shown in FIGS. 2 and 6, as viewed from the front of the vehicle, the left illuminator 53 is located to the left of the left front fork tube 22, while the right illuminator 54 is located to the right of the right front fork tube 22.

As shown in FIGS. 3 to 6, the headlight cover 40 includes a cover lens (outer lens) 56 made from a colorless and transparent synthetic resin. The cover lens 56 includes a center lens 56C, a left lens 56L and a right lens 56R. The cover lens 56 is located forward of the lens 48.

As shown in FIG. 6, the center lens 56C is located forward of both the illuminator 46 of the projector lamp unit 42 and the illuminator 50 of the reflector lamp unit 44. The center lens 56C passes light emitted by the illuminator 46 and illuminator 50. As shown in FIG. 6, as viewed from the front of the vehicle, the center lens 56C is larger than each of the left lens 56L and the right lens 56R.

As shown in FIGS. 3, 4 and 6, the rear edge 56Cr of the center lens 56C is located higher than the foremost point 56Cf. A rear portion of the center lens 56C has a greater width in a left-to-right direction of the vehicle than a front portion of the center lens 56C. In the present embodiment, the rear edge 56Cr of the center lens 56C means the edge of the center lens 56C that is located rearward.

As shown in FIG. 6, the left lens 56L is located forward of the left illuminator 53. The left lens 56L passes light emitted by the left illuminator 53. As shown in FIGS. 3 and 6, the rearmost point 56Lr of the left lens 56L is located higher than the foremost point 56Lf of the lens. In the present embodiment, the foremost point 56Lf of the left lens 56L is the foremost of the lens as viewed from above the cover lens 56, as shown in FIG. 5.

As shown in FIGS. 3, 5 and 6, the left lens 56L is formed integrally with the center lens 56C. In the present embodiment, the foremost point and surrounding portions of the left lens 56L are connected with the center lens 56C in the vicinity of the foremost point of the center lens 56C.

As shown in FIG. 5, the foremost point 56Lf of the left lens 56L is located rearward of the foremost point 56Cf of the center lens 56C. As shown in FIG. 6, the foremost point 56Lf of the left lens 56L is located to the right of the left front fork tube 22.

As shown in FIG. 5, the rearmost point 56Lr of the left lens 56L is located rearward of the rear edge 56Cr of the center lens 56C. As shown in FIGS. 5 and 6, the rearmost point 56Lr of the left lens 56L is farther from the center lens 56C than the foremost point 56Lf of the left lens 56L is in a left-to-right direction of the vehicle. As shown in FIG. 6, the rearmost point 56Lr of the left lens 56L is located to the left of the left front fork tube 22.

As shown in FIG. 6, the right lens 56R is located forward of the right illuminator 54. The right lens 56R passes light emitted by the right illuminator 54. As shown in FIGS. 3 and 6, the rearmost point 56Rr of the right lens 56R is located higher than the foremost point 56Rf of the lens. In the present embodiment, the foremost point 56Rf of the right lens 56R is the foremost of the lens as viewed from above the cover lens 56, as shown in FIG. 5.

As shown in FIGS. 3, 5 and 6, the right lens 56R is formed integrally with the center lens 56C. In the present embodiment, the foremost point and surrounding portions of the right lens 56R is connected with the center lens 56C in the vicinity of the foremost point of the center lens 56C.

As shown in FIG. 5, the foremost point 56Rf of the right lens 56R is located rearward of the foremost point 56Cf of the center lens 56C. As shown in FIG. 6, the foremost point 56Rf of the right lens 56R is located to the left of the right front fork tube 22.

As shown in FIG. 5, the rearmost point 56Rr of the right lens 56R is located rearward of the rear edge 56Cr of the center lens 56C. As shown in FIGS. 5 and 6, the rearmost point 56Rr of the right lens 56R is farther from the center lens 56C than the foremost point 56Rf of the right lens 56R is in a left-to-right direction of the vehicle. As shown in FIG. 6, the rearmost point 56Rr of the right lens 56R is located to the right of the right front fork tube 22.

### [Attachment device]

The headlight 36 is attached to the head pipe 14 by an attachment device 58. The attachment device 58 includes an upper connecting member 60 and a lower connecting member 62.

The upper connecting member 60 is a metal stay. The upper connecting member 60 connects the headlight 36 with the head pipe 14. The upper connecting member 60 includes an attachment portion 64 and an extending portion 66.

The attachment portion 64 may be shaped as a plate, for example. The attachment portion 64 is attached to an attachment piece 68 included in the headlight 36.

As shown in FIGS. 3 to 5, the attachment piece 68 includes an extending portion 70 and a vertical wall 72.

The extending portion 70 extends rearward from the rear portion of the headlight body 38. In the implementation shown in FIGS. 3 to 5, two extending portions 70 are formed on the upper edge of the headlight body 38.

The vertical wall 72 is provided on the rear end of the extending portion 70. In the implementation shown in FIGS. 3 to 5, the vertical wall 72 connects the rear ends of two extending portions 70. The vertical wall 72 extends upward from the rear end of the extending portion 70. In other words, the vertical wall 72 extends in a direction substantially perpendicular to the direction in which the extending portion 70 extends. As shown in FIG. 5, the right end of the vertical wall 72 is located within the vehicle to the right of the central axis L3 of the head pipe 14, while the left end of the vertical wall 72 is located within the vehicle to the left of the central axis L3 of the head pipe 14.

For example, the attachment portion 64 may be attached to the attachment piece 68 in the following manner. First, the attachment surface of the attachment portion 64 (i.e. the front surface of the attachment portion 64) is placed over the attachment surface of the attachment piece 68 (i.e. the rear surface of the vertical wall 72). Then, the attachment portion 64 is attached to the attachment piece 68 by a bolt and a nut, for example.

The attachment portion 64 may have strengthening ribs on its lower edge. This will improve the strength of the attachment portion 64.

The extending portion 66 is an elongated member. In the implementation shown in FIGS. 4 and 5, the extending portion 66 includes an upper extending portion 661, a lower extending portion 662 and a connecting portion 663. The upper extending portion 661 and lower connecting portion 662 extend in a front-to-rear direction. The connecting portion 663 extends in a top-to-bottom direction to connect the upper extending portion 661 with the lower connecting portion 662.

The attachment portion 64 is provided on the front end of the extending portion 66. In the present embodiment, the front end of the extending portion 66 is connected with the right end of the attachment portion 64. The attachment portion 64 may be connected with the extending portion 66 by welding the extending portion 66 to the attachment portion 64, for example.

The rear end of the extending portion 66 is attached to the head pipe 14. The extending portion 66 may be attached to the head pipe 14 by welding or bolting, for example.

The extending portion 66 may have strengthening ribs on at least one of its upper edge and its lower edge. This will improve the strength of the extending portion 66.

The lower connecting member 62 is a metal stay. The lower connecting member 62 connects the headlight 36 with the head pipe 14. The lower connecting member 62 includes an extending portion 74, a first attachment portion 76 and a second attachment portion 78.

The extending portion 74 is an elongated member. The extending portion 74 may be, for example, a rod or pipe, or may be a plate.

The first attachment portion 76 is provided on the front end of the extending portion 74. The first attachment portion 76 may be fixed to the extending portion 74 by welding, for example.

The first attachment portion 76 is formed by fixing the front end of the extending portion 74 to the rear portion of the headlight body 38. The first attachment portion 76 may be fixed to the headlight body 38 by bolting, for example. In the present embodiment, the first attachment portion 76 is fixed to the headlight by fixing the front end of the extending portion 74 to a mount 77 included in the support member 45. The mount 77 is located higher than the rear bottom edge 451 of the support member 45 and in the vicinity of the rear bottom edge 451. The rear bottom edge 451 is the rear edge of the lower surface 452 of the support member 45. The mount 77 is provided on an attachment surface 453 of the support member 45. As shown in FIG. 5, the mount 77 is located in the vehicle to the left of the central axis L3 of the head pipe 14. As shown in FIG. 5, the mount 77 is located forward of the vertical wall 72. The attachment surface 453, together with the lower surface 452, defines the rear bottom edge 451. In the present embodiment, the attachment surface 453 is a lower portion of the rear surface of the headlight 36.

The second attachment portion 78 is provided on the rear end of the extending portion 74. The second attachment portion 78 may be fixed to the extending portion 74 by welding, for example. In the implementation shown in FIGS. 4 and 5, the second attachment portion 78 includes two fixing pieces 781 and 782. These fixing pieces 781 and 782 are used to fix the second attachment portion 78 to the rear end of the extending portion 74. The fixing piece 781 is fixed to the extending portion 74 at the rear end of the extending portion 74. The fixing piece 782 is fixed to the extending portion 74 and located closer to the front end of the portion than the fixing piece 781 is. Thus, the second attachment portion 78 is fixed to the extending portion 74 more firmly.

The second attachment portion 78 is formed by fixing the rear end of the extending portion 74 to the head pipe 14. The second attachment portion 78 may be fixed to the head pipe 14 by welding or bolting, for example.

As shown in FIG. 4, in the present embodiment, the attachment device 58, i.e. the upper connecting member 60 and lower connecting member 62 are both located higher than the bracket 20. This will reduce the lengths of the upper connecting member 60 and lower connecting member 62 (i.e. their lengths in a front-to-rear direction of the vehicle). As a result, the strength of each member, i.e. the upper connecting member 60 and lower connecting member 62, will be improved. Further, the headlight 36 will be closer to the head pipe 14, thereby improving its resistance to vibrations while driving, for example. Accordingly, the headlight 36 may be attached to the head pipe 14 in a stable manner even if a large headlight 36 including four illuminators 46, 50, 53 and 54 as shown in FIGS. 3 to 6 is employed, for example. In other words, the headlight 36 may be supported in a stable manner.

Particularly, in the present embodiment, the headlight 36 includes a projector lamp unit 42. The projector lamp unit 42 includes a lens 48. The lens 48 is made of glass. Thus, the lens 48 is relatively heavy. Even with such a lens 48, the headlight 36 is supported in a stable manner.

In the present embodiment, when the upper connecting member 60 and lower connecting member 62 connect the headlight 36 with the head pipe 14, the bracket 20 is located lower than the lower connecting member 62, as shown in FIG. 4. The rear bottom edge 451 of the headlight 36 is located forward of the bracket 20. The attachment surface 453 is located forward of the bracket 20. The mount 77 is located forward of the bracket 20. That is, the bracket 20 is not in contact with the headlight 36 or the lower connecting member 62.

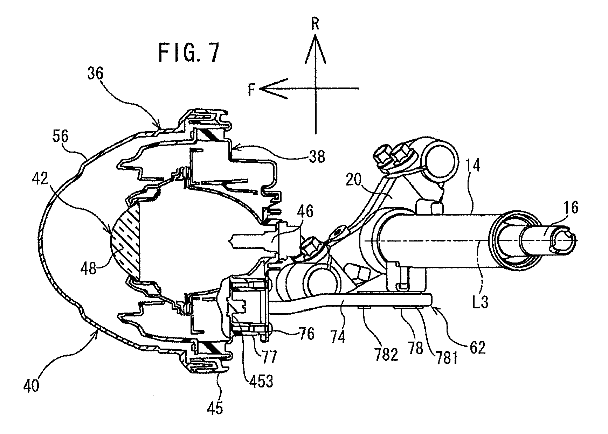

FIG. 4 shows the motorcycle where the steering shaft 16 is positioned in the middle of its rotational range. Starting from this state, the handlebars 18 (and thus the steering shaft 16) may be fully turned to the right, as shown in FIG. 7. In this state, the left end of the bracket 20 (i.e. the portion thereof that supports the left front fork tube 22) is located in the vehicle to the left of the central axis L3 of the head pipe 14. In other words, the left end of the bracket 20 will not be located in the vehicle to the right of the central axis L3 of the head pipe 14 even when the handlebars 18 are fully turned to the right.

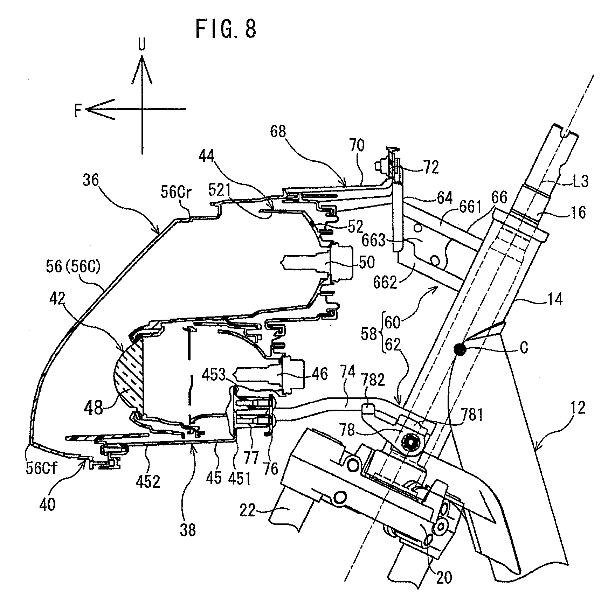

When the handlebars 18 are fully turned to the right, the bracket 20 is located lower than the lower connecting member 62, as shown in FIG. 8. The rear bottom edge 451 of the headlight 36 is located forward of the bracket 20. The attachment surface 453 is located forward of the bracket 20. The mount 77 is located forward of the bracket 20.

That is, the bracket 20 will not be in contact with the headlight 36 and lower connecting member 62 even when the handlebars 18 are fully turned to the right.

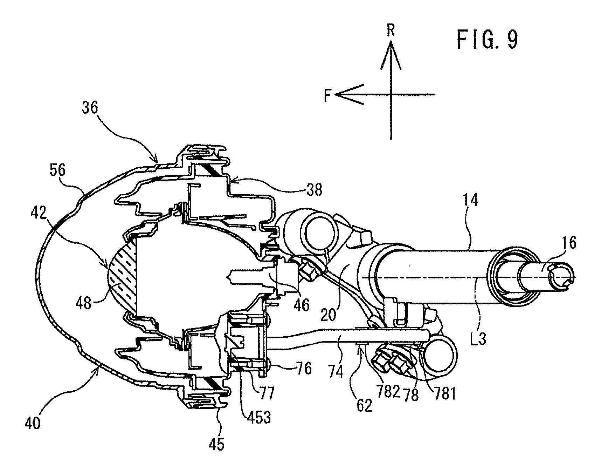

Starting from the state shown in FIG. 4, the handlebars 18 may be fully turned to the left, as shown in FIG. 9. In this state, the right end of the bracket 20 (i.e. the portion thereof that supports the right front fork tube 22) is located in the vehicle to the right of the central axis L3 of the head pipe 14. In other words, the right end of the bracket 20 will not be located in the vehicle to the left of the central axis L3 of the head pipe 14 even when the handlebars 18 are fully turned to the left.

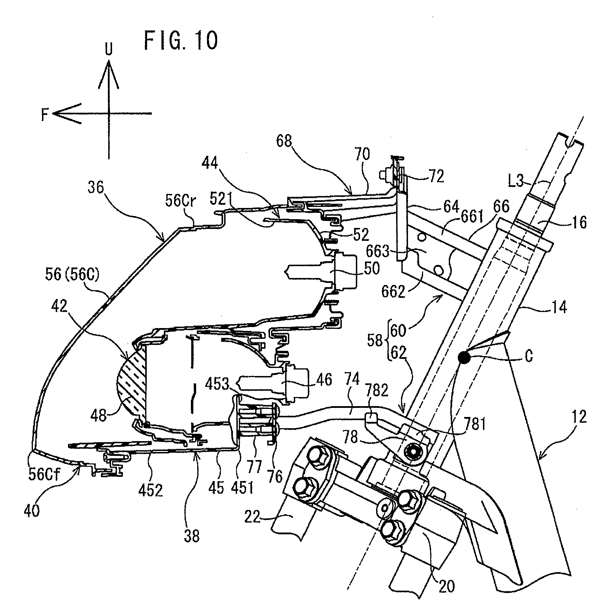

When the handlebars 18 are fully turned to the left, the bracket 20 is located lower than the lower connecting member 62, as shown in FIG. 10. The rear bottom edge 451 of the headlight 36 is located forward of the bracket 20. The attachment surface 453 is located forward of the bracket 20. The mount 77 is located forward of the bracket 20.

That is, the bracket 20 will not be in contact with the headlight 36 and lower connecting member 62 even when the handlebars 18 are fully turned to the left.

In the present embodiment, the attachment device 58 includes an upper connecting member 60 and lower connecting member 62. The upper connecting member 60 and the lower connecting member 62 are vertically separated from each other. Thus, the headlight 36 may be supported at two vertically separated locations. As a result, the headlight 36 may be supported in a more stable manner.

As shown in FIG. 4, in the present embodiment, the upper connecting member 60 is fixed to the head pipe 14 at a location that is closer to its upper end than the center C of the head pipe 14 in an axial direction is. The lower connecting member 62 is fixed to the head pipe 14 at a location that is closer to its lower end than the center C of the head pipe 14 in an axial direction is. This allows the location at which the upper connecting member 60 is fixed to the head pipe 14 to be vertically separated from the location at which the lower connecting member 62 is fixed to the head pipe 14. As a result, the headlight 36 may be supported in a yet more stable manner.

As shown in FIG. 5, in the present embodiment, the end of the upper connecting member 60 that is close to the headlight 36 is shifted in a left-to-right direction of the vehicle from the end of the lower connecting member 62 that is close to the headlight 36. This allows the headlight 36 to be supported in a still more stable manner.

As shown in FIG. 5, in the present embodiment, the end of the upper connecting member 60 that is close to the headlight 36 is shifted in a front-to-rear direction of the vehicle from the end of the lower connecting member 62 that is close to the headlight 36. This allows the headlight 36 to be supported in a yet more stable manner.

In the present embodiment, the upper connecting member 60 and lower connecting member 62 are directly fixed to the head pipe 14. Thus, the upper connecting member 60 and lower connecting member 62 may be fixed to the head pipe 14 more firmly. As a result, the headlight 36 may be supported in a more stable manner.

As shown in FIGS. 2 and 4, in the present embodiment, the illuminator 46 of the projector lamp unit 42 and the illuminator 50 of the reflector lamp unit 44 overlap the head pipe 14 as viewed from the front of the vehicle. In other words, as viewed from the front of the vehicle, the projector lamp unit 42 and reflector lamp unit 44 overlap the head pipe 14.

Particularly, in the present embodiment, the rearmost point of the illuminator 46 is located forward of the rearmost point of the illuminator 50.

In addition, as shown in FIGS. 7 and 8, in the present embodiment, the left end of the bracket 20 is located in the vehicle to the left of the central axis L3 of the head pipe 14 when the handlebars 18 are fully turned to the right. Further, as shown in FIGS. 9 and 10, the right end of the bracket 20 is located in the vehicle to the right of the central axis L3 of the head pipe 14 when the handlebars 18 are fully turned to the left.

Even when the bracket 20 is rotated, the projector lamp unit 42 and reflector lamp unit 44 are unlikely to contact the bracket 20. The projector lamp unit 42 and reflector lamp unit 44 can be easily brought close to the head pipe 14.

As shown in FIGS. 7 and 8, in the present embodiment, the attachment surface 453 of the support member 45 is located forward of the bracket 20 when the handlebars 18 are fully turned to the right. Further, as shown in FIGS. 9 and 10, the attachment surface 453 of the support member 45 is located forward of the bracket 20 when the handlebars 18 are fully turned to the left. This prevents the bracket 20 from contacting the headlight 36.

In the present embodiment, the projector lamp unit 42 and reflector lamp unit 44 are vertically arranged, resulting in a long dimension of the headlight 36 in a top-to-bottom direction. This makes it difficult to allow the headlight 36 to be brought upward of the bracket 20. However, as described above, in the present embodiment, the attachment surface 453 of the support member 45 is located forward of the bracket 20. This prevents the bracket 20 from contacting the headlight 36.

As described above, in the present embodiment, the attachment surface 453 of the support member 45 is located forward of the bracket 20. As such, it is important to ensure a sufficient strength of the attachment device 58. In the present embodiment, the attachment device 58 includes an upper connecting member 60 and lower connecting member 62. This facilitates ensuring a sufficient strength of the attachment device 58. This allows the headlight 36 to be supported in a stable manner.

In the present embodiment, the projector lamp unit 42 includes a lens 48 made of glass. Thus, the projector lamp unit 42 is heavier than the reflector lamp unit 44. In the motorcycle 10, the projector lamp unit 42 is located lower than the reflector lamp unit 44. As a result, the headlight 36 may be easily supported in a stable manner.

In the above embodiment, a member made of resin, for example, may be present between at least one of the upper connecting member 60 and lower connecting member 62 and the headlight 36.

While the above embodiment has illustrated a two-wheeled motorcycle, the present invention is not limited thereto and may be used in a three- or four-wheeled leaning vehicle.

## Claims

1. A straddle type vehicle comprising:
a front wheel (24);
a pair of front wheel support members (22) supporting the front wheel (24);
a bracket (20) supporting an upper end of each of the front wheel support members (22);
a steering shaft (16) extending upward from the bracket (20);
a handlebar (18) connected to the steering shaft (16);
a body frame (12) including a head pipe (14) rotatably supporting the steering shaft (16);
a headlight (36) located forward of the head pipe (14); and
an attachment device (58) configured to attach the headlight (36) to the body frame (12),
wherein the headlight (36) includes:
an illuminator (46);
an inner lens (48) made of glass configured to pass light from the illuminator (46); and
an outer lens (56) made of a synthetic resin positioned to pass light from the illuminator (46) that has passed through the inner lens (48),
the attachment device (58) and the headlight (36) are positioned so as not to get in contact with the bracket (20) even when the handlebar (18) is fully turned to the right or to the left,
the attachment device (58) includes a connecting member configured to connect the headlight (36) with the body frame (12), and
the connecting member includes upper and lower connecting members (60, 62),
**characterized in that**
the upper and lower connecting members (60, 62) are separate members with ends close to the headlight (36) separated vertically from each other, and
an end of the upper connecting member (60) close to the body frame (12) is located closer to an upper end of the head pipe (14) than a center (C) of the head pipe (14) in an axial direction is, and an end of the lower connecting member (62) close to the body frame (12) is located closer to a lower end of the head pipe (14) than the center (C) of the head pipe (14) in the axial direction is.

2. The straddle type vehicle according to claim 1, wherein:
the end of the upper connecting member (60) that is close to the headlight (36) and the end of the lower connecting member (62) that is close to the headlight (36) are separated from each other in a left-to-right direction.

3. The straddle type vehicle according to claim 1 or 2, wherein:
the end of the upper connecting member (60) that is close to the headlight (36) and the end of the lower connecting member (62) that is close to the headlight (36) are separated from each other in a front-to-rear direction.

4. The straddle type vehicle according to any one of claim 1 to 3, wherein:
each of the upper and lower connecting members (60, 62) includes a metal stay.

5. The straddle type vehicle according to claim 4, wherein:
the stay is directly fixed to the body frame (12).

6. The straddle type vehicle according to any one of claims 1 to 5, wherein:
the headlight (36) includes:
a low beam illuminator comprising the illuminator (46); and
a high beam illuminator (50),
the low beam illuminator (46) and the high beam illuminator (50) being arranged vertically, overlapping the head pipe (14) as viewed from a front of the vehicle.

7. The straddle type vehicle according to claim 6, wherein:
out of the low beam illuminator (46) and the high beam illuminator (50), one located lower has a rearmost point located forward of a rearmost point of one located higher.

8. The straddle type vehicle according to any one of claims 1 to 7, wherein:
the headlight (36) includes:
a projector lamp unit (42); and
a reflector lamp unit (44),
the projector lamp unit (42) including the inner lens (48),
the projector lamp unit (42) located lower than the reflector lamp unit (44), and
a foremost point of the projector lamp unit (42) located forward of a foremost point of the reflector lamp unit (44).

9. The straddle type vehicle according to claim 8, wherein:
the projector lamp unit (42) and the reflector lamp unit (44) are located overlapping the head pipe (14) as viewed from the front of the vehicle, and
left and right ends of the bracket (20) are located to a left and right, respectively, of a center axis (L3) of the head pipe (14) when the handlebar (18) is fully turned to the right or to the left, respectively.

10. The straddle type vehicle according to any one of claims 1 to 9, wherein:
a lower portion of a rear surface of the headlight (36) is located forward of the bracket (20) when the handlebar (18) is fully turned to one side, and
the lower portion of the rear surface of the headlight (36) is located forward of the bracket (20) when the handlebar (18) is fully turned to the other side.

## Patentansprüche

1. Ein Fahrzeug vom rittlings zu fahrenden Typ, das folgende Merkmale aufweist:
ein Vorderrad (24);
ein Paar von Vorderradtragebaugliedern (22), die das Vorderrad (24) tragen;
eine Stütze (20), die ein oberes Ende jedes der Vorradtragebauglieder (22) trägt;
eine sich von der Stütze (20) aus nach oben erstreckende Lenkwelle (16);
eine mit der Lenkwelle (16) verbundene Lenkstange (18);
einen Karosserierahmen (12), der ein Kopfrohr (14) umfasst, das die Lenkwelle (16) auf drehbare Weise trägt;
ein weiter vorne als das Kopfrohr (14) befindlicher Scheinwerfer (36); und
eine Befestigungsvorrichtung (58), die dazu konfiguriert ist, den Scheinwerfer (36) an dem Karosserierahmen (12) zu befestigen,
wobei der Scheinwerfer (36) folgende Merkmale umfasst:
eine Beleuchtungsvorrichtung (46);
eine aus Glas hergestellte Innenlinse (48), die dazu konfiguriert ist, Licht von der Beleuchtungsvorrichtung (46) durchzulassen; und
eine aus einem synthetischen Harz hergestellte Außenlinie (56), die dazu positioniert ist, Licht von der Beleuchtungsvorrichtung (46), das die Innenlinse (48) passiert hat, durchzulassen,
die Befestigungsvorrichtung (58) und der Scheinwerfer (36) sind dahin gehend positioniert, sogar dann, wenn die Lenkstange (18) vollständig nach rechts oder nach links gedreht ist, nicht mit der Stütze (20) in Kontakt zu gelangen,
die Befestigungsvorrichtung (58) umfasst ein Verbindungsbauglied, das dazu konfiguriert ist, den Scheinwerfer (36) mit dem Karosserierahmen (12) zu verbinden, und
das Verbindungsbauglied umfasst ein oberes und ein unteres Verbindungsbauglied (60, 62),
**dadurch gekennzeichnet, dass**
das obere und das untere Verbindungsbauglied (60, 62) getrennte Bauglieder mit nahe bei dem Scheinwerfer (36) liegenden Enden sind, die vertikal voneinander getrennt sind, und
ein Ende des oberen Verbindungsbauglieds (60), das nahe bei dem Karosserierahmen (12) liegt, sich näher bei einem oberen Ende des Kopfrohrs (14) befindet als eine Mitte (C) des Kopfrohrs (14) dies in einer axialen Richtung tut, und ein Ende des unteren Verbindungsbauglieds (62), das nahe bei dem Karosserierahmen (12) liegt, sich näher bei einem unteren Ende des Kopfrohrs (14) befindet als die Mitte (C) des Kopfrohrs (14) dies in der axialen Richtung tut.

2. Das Fahrzeug vom rittlings zu fahrenden Typ gemäß Anspruch 1, bei dem:
das Ende des oberen Verbindungsbauglieds (60), das nahe bei dem Scheinwerfer (36) liegt, und das Ende des unteren Verbindungsbauglieds (62), das nahe bei dem Scheinwerfer (36) liegt, in einer von links nach rechts verlaufenden Richtung voneinander getrennt sind.

3. Das Fahrzeug vom rittlings zu fahrenden Typ gemäß Anspruch 1 oder 2, bei dem:
das Ende des oberen Verbindungsbauglieds (60), das nahe bei dem Scheinwerfer (36) liegt, und das Ende des unteren Verbindungsbauglieds (62), das nahe bei dem Scheinwerfer (36) liegt, in einer von vorne nach hinten verlaufenden Richtung voneinander getrennt sind.

4. Das Fahrzeug vom rittlings zu fahrenden Typ gemäß einem der Ansprüche 1 bis 3, bei dem:
sowohl das obere als auch das untere Bauglied (60, 62) eine Metallstrebe umfassen.

5. Das Fahrzeug vom rittlings zu fahrenden Typ gemäß Anspruch 4, bei dem:
die Strebe direkt an dem Karosserierahmen (12) befestigt ist.

6. Das Fahrzeug vom rittlings zu fahrenden Typ gemäß einem der Ansprüche 1 bis 5, bei dem:
der Scheinwerfer (36) folgende Merkmale umfasst:
eine Abblendlicht-Beleuchtungsvorrichtung, die die Beleuchtungsvorrichtung (46) aufweist; und
eine Fernlicht-Beleuchtungsvorrichtung (50),
wobei die Abblendlicht-Beleuchtungsvorrichtung (46) und die Fernlicht-Beleuchtungsvorrichtung (50) vertikal angeordnet sind, wobei sie von einer Vorderseite des Fahrzeugs aus betrachtet das Kopfrohr (14) überlappen.

7. Das Fahrzeug vom rittlings zu fahrenden Typ gemäß Anspruch 6, bei dem:
von der Abblendlicht-Beleuchtungsvorrichtung (46) und der Fernlicht-Beleuchtungsvorrichtung (50) eine weiter unten befindliche einen hintersten Punkt aufweist, der sich weiter vorne befindet als ein hinterster Punkt einer weiter oben befindlichen.

8. Das Fahrzeug vom rittlings zu fahrenden Typ gemäß einem der Ansprüche 1 bis 7, bei dem:
der Scheinwerfer (36) folgende Merkmale umfasst:
eine Projektionslampeneinheit (42); und
eine Reflektorlampeneinheit (44),
wobei die Projektionslampeneinheit (42) die Innenlinse (48) umfasst,
die Projektionslampeneinheit (42) sich weiter unten befindet als die Reflektorlampeneinheit (44), und
ein vorderster Punkt der Projektionslampeneinheit (42) sich weiter vorne befindet als ein vorderster Punkt der Reflektorlampeneinheit (44).

9. Das Fahrzeug vom rittlings zu fahrenden Typ gemäß Anspruch 8, bei dem:
die Projektionslampeneinheit (42) und die Reflektorlampeneinheit (44) so positioniert sind, dass sie von der Vorderseite des Fahrzeugs aus betrachtet das Kopfrohr (14) überlappen, und
sich ein linkes und ein rechtes Ende der Stütze (20) auf einer linken beziehungsweise einer rechten Seite einer Mittelachse (L3) des Kopfrohrs (14) befinden, wenn die Lenkstange (18) vollständig nach rechts beziehungsweise nach links gedreht ist.

10. Das Fahrzeug vom rittlings zu fahrenden Typ gemäß einem der Ansprüche 1 bis 9, bei dem:
sich ein unterer Abschnitt einer hinteren Oberfläche des Scheinwerfers (36) weiter vorne als die Stütze (20) befindet, wenn die Lenkstange (18) vollständig zu einer Seite hin gedreht ist, und
sich ein unterer Abschnitt der hinteren Oberfläche des Scheinwerfers (36) weiter vorne als die Stütze (20) befindet, wenn die Lenkstange (18) vollständig zur anderen Seite hin gedreht ist.

## Revendications

1. Véhicule de type à selle, comprenant:
une roue avant (24);
une paire d'éléments de support de roue avant (22) supportant la roue avant (24);
un support (20) supportant une extrémité supérieure de chacun des éléments de support de roue avant (22);
un arbre de direction (16) s'étendant vers le haut depuis le support (20);
un guidon (18) connecté à l'arbre de direction (16);
un châssis de carrosserie (12) comportant un tuyau de tête (14) supportant de manière rotative l'arbre de direction (16);
un phare (36) situé en avant du tuyau de tête (14); et
un dispositif de fixation (58) configuré pour fixer le phare (36) au châssis de carrosserie (12),
dans lequel le phare (36) comporte:
un illuminateur (46);
une lentille intérieure (48) réalisée en verre configurée pour transmettre la lumière provenant de l'illuminateur (46); et
une lentille extérieure (56) réalisée en une résine synthétique positionnée de manière à transmettre la lumière provenant de l'illuminateur (46) qui a traversé la lentille intérieure (48),
le dispositif de fixation (58) et le phare (36) sont positionnés de manière à ne pas entrer en contact avec le support (20), même lorsque le guidon (18) est entièrement tourné vers la droite ou vers la gauche,
le dispositif de fixation (58) comporte un élément de connexion configuré pour connecter le phare (36) au châssis de carrosserie (12), et
l'élément de connexion comporte des éléments de connexion supérieur et inférieur (60, 62),
**caractérisé par le fait que**
les éléments de connexion supérieur et inférieur (60, 62) sont des éléments séparés avec des extrémités à proximité du phare (36) séparées verticalement l'une de l'autre, et
une extrémité de l'élément de connexion supérieur (60) à proximité du châssis de carrosserie (12) est située plus près d'une extrémité supérieure du tuyau de tête (14) qu'un centre (C) du tuyau de tête (14) dans une direction axiale, et une extrémité de l'élément de connexion inférieur (62) à proximité du châssis de carrosserie (12) est située plus près d'une extrémité inférieure du tuyau de tête (14) que le centre (C) du tuyau de tête (14) dans la direction axiale.

2. Véhicule de type à selle selon la revendication 1, dans lequel:
l'extrémité de l'élément de connexion supérieur (60) qui se situe à proximité du phare (36) et l'extrémité de l'élément de connexion inférieur (62) qui se situe à proximité du phare (36) sont séparées l'une de l'autre dans une direction de gauche à droite.

3. Véhicule de type à selle selon la revendication 1 ou 2, dans lequel:
l'extrémité de l'élément de connexion supérieur (60) qui se situe à proximité du phare (36) et l'extrémité de l'élément de connexion inférieur (62) qui se situe à proximité du phare (36) sont séparées l'une de l'autre dans une direction de l'avant à l'arrière.

4. Véhicule de type à selle selon l'une quelconque des revendications 1 à 3, dans lequel:
chacun des éléments de connexion supérieur et inférieur (60, 62) comporte un étai métallique.

5. Véhicule de type à selle selon la revendication 4, dans lequel:
l'étai est fixé directement au châssis de carrosserie (12).

6. Véhicule de type à selle selon l'une quelconque des revendications 1 à 5, dans lequel:
le phare (36) comprend:
un illuminateur à faisceau bas comprenant l'illuminateur (46); et
un illuminateur à faisceau haut (50),
l'illuminateur à faisceau bas (46) et l'illuminateur à faisceau haut (50) étant disposés verticalement, en recouvrement avec le tuyau de tête (14), tel que vu depuis l'avant du véhicule.

7. Véhicule de type à selle selon la revendication 6, dans lequel:
parmi l'illuminateur à faisceau bas (46) et l'illuminateur à faisceau haut (50), celui situé plus bas présente un point situé le plus en arrière qui est situé en avant par rapport à un point le plus en arrière de celui situé plus haut.

8. Véhicule de type à selle selon l'une quelconque des revendications 1 à 7, dans lequel:
le phare (36) comporte:
une unité de lampe de projecteur (42); et
une unité de lampe à réflecteur (44),
l'unité de lampe de projecteur (42) comportant la lentille intérieure (48),
l'unité de lampe de projecteur (42) est située plus bas que l'unité de lampe à réflecteur (44), et
un point le plus en avant de l'unité de lampe de projecteur (42) est situé à l'avant d'un point le plus en avant de l'unité de lampe à réflecteur (44).

9. Véhicule de type à selle selon la revendication 8, dans lequel:
l'unité de lampe de projecteur (42) et l'unité de lampe à réflecteur (44) sont situées en recouvrement avec le tuyau de tête (14), tel que vu depuis l'avant du véhicule, et
les extrémités gauche et droite du support (20) sont situées respectivement à gauche et à droite d'un axe central (L3) du tuyau de tête (14) lorsque le guidon (18) est complètement tourné respectivement à droite ou à gauche.

10. Véhicule de type à selle selon l'une quelconque des revendications 1 à 9, dans lequel:
une partie inférieure d'une surface arrière du phare (36) est située en avant du support (20) lorsque le guidon (18) est entièrement tourné d'un côté, et
la partie inférieure de la surface arrière du phare (36) est située en avant du support (20) lorsque le guidon (18) est complètement tourné de l'autre côté.
